# EUROPÄISCHE PATENTSCHRIFT

(11) **EP 1 751 460 B1**
(45) Veröffentlichungstag und Bekanntmachung des Hinweises auf die Patenterteilung: **24.11.2010**
(21) Anmeldenummer: 05753534.6
(22) Anmeldetag: 27.05.2005
(51) Int. Cl.: F16L 33/207

(54) **ANSCHLUSSEINRICHTUNG**
CONNECTING DEVICE
DISPOSITIF DE RACCORDEMENT

(30) Priorität: 02.06.2004 DE 102004026789
(43) Veröffentlichungstag der Anmeldung: 14.02.2007
(73) Patentinhaber: Eaton Fluid Power GmbH, 76532 Baden-Baden (DE)
(72) Erfinder: MARINA, Voicu, 76593 Gernsbach (DE)
(74) Vertreter: Leadbetter, Benedict
(86) Internationale Anmeldenummer: PCT/EP2005/005765
(87) Internationale Veröffentlichungsnummer: WO 2005/119113

(56) Entgegenhaltungen:
- DE-U1- 9 104 415
- GB-A- 1 402 291
- GB-A- 2 091 832
- US-A- 4 664 424

## Beschreibung

Die Erfindung betrifft eine Anschlusseinrichtung zum Anschließen eines Schlauches an eine Fluid führende Leitung.

In der Kraftfahrzeugtechnik aber auch bei anderen Anwendungen kommt es immer wieder darauf an, Schläuche an Leitungen, Anschlussnippel von Aggregaten, wie beispielsweise Pumpen, Kühlern, usw. anzuschließen. Dies wird zumindest dann schwierig, wenn zur Herstellung der Verbindung und für die Verbindung selbst nur wenig Bauraum, insbesondere wenig Platz bezogen auf Längsrichtung des anzuschließenden Schlauches zur Verfügung steht. Andererseits wird gerade in der Kraftfahrzeugtechnik erwartet, dass Schlauchverbindungen auch unter widrigen Verhältnissen korrosivem Angriff, Temperaturwechseln und mechanischen Belastungen, wie Vibrationen und dergleichen, dauerhaft dicht sind. Solche Verbindungen sind insbesondere Nippel-Schlauch-Verbindungen, mit denen Anschlussnippel an Schläuchen zu befestigen sind. Solche Nippelanschlüsse dürfen in Axialrichtung nicht zu lang sein.

Aus der GB 2 091 832 A, DE 91 04 415 U1 oder US 4,664,424 ist eine Anschlusseinrichtung mit einem Anschlussnippel und einer mit dem Anschlussnippel verbundenen Presshülse bekannt, bei der die Presshülse eine am Anschlussnippel vorgesehene ringsum laufende Ringwulst axial überragt und die Ringwulst mit einem radial nach innen vorstehenden, das axiale Ende der Presshülse darstellenden Radialvorsprung hintergreift.

Ferner offenbart die GB 1 402 291 eine Anschlusseinrichtung, bei der am Anschlussnippel ein Flansch vorgesehen ist, der als Axialanschlag für die Positionierung der Presshülse dient. Hierfür ist in das axiale Ende der Presshülse eine axial und radial offene nutähnliche Ausnehmung eingebracht, deren axiale Dimension geringer ist als die des am Anschlussnippel vorgesehenen Flansches. Bei hergestellter Verbindung zwischen der Presshülse und dem Anschlussnippel ragt der Flansch in die nutähnliche Ausnehmung hinein und steht axial aus der Presshülse vor.

Davon ausgehend ist es Aufgabe der Erfindung, eine prozesssicher herstellbare, dauerhaft dichte und kurze Nippel-Schlauch-Verbindung zu schaffen.

Diese Aufgabe wird mit der Anschlusseinrichtung nach Anspruch 1 gelöst:
Die erfindungsgemäße Anschlusseinrichtung umfasst einen Anschlussnippel und eine Presshülse, mit deren Hilfe der anzuschließende Schlauch auf dem Nippel gehalten ist. Der Anschlussnippel ist mit einer Ringwulst versehen, die von einem plastisch verformten Sicherungsabschnitt der Presshülse umgriffen ist. Der Sicherungsabschnitt sichert die Presshülse auf dem Anschlussnippel formschlüssig. Der Schlauchfassungsabschnitt der Presshülse presst hingegen den Schlauch gegen die Mantelfläche des Anschlussnippels und hält diesen somit abgedichtet fest.

Durch die radial nach innen gerichtete Quetschung des Sicherheitsabschnitts in unmittelbarer radialer Fluchtung zu der Ringwulst wird der für die axiale Sicherung der Presshülse an den Anschlussnippel erforderliche Platz sehr gering. Unmittelbar im Anschluss an die Ringwulst ist der Nippel nach außen hin frei. Er kann beispielsweise mit Außengewinde versehen und in Gewindebohrungen eingeschraubt werden.

Nachdem lediglich der Bereich der Wulst zur Fixierung der Presshülse dient, kann die gesamte übrige Länge des Anschlussmittels zur Fassung des Schlauchs und zur Sicherung desselben auf dem Anschlussnippel genutzt werden. Es sind somit auch mit sehr kurzen Anschlussnippeln Dichtungslängen von über 20 mm realisierbar. Des Weiteren bewirkt die Verpressung des Sicherungsabschnitts mit der Ringwulst nicht nur die prozesssichere und dauerhafte axiale Sicherung der Presshülse auf dem Anschlussnippel sondern sie trägt auch zur Abdichtung des Schlauchs an dem Nippel bei.

Der Sicherungsabschnitt und die Ringwulst sind so aufeinander abgestimmt, dass der plastisch verformte Bereich des Sicherungsabschnitts mit der Wulst bündig abschließt. Mit dieser Maßnahme wird eine optimale axiale Befestigung der Presshülse an dem Anschlussnippel erreicht, ohne dass dazu Bauraum auf der freien Anschlussseite des Nippels, d.h. auf der dem Schlauch abgewandten Seite erforderlich wäre. Außerdem lässt sich die Verpressung mit geringen Verformungskräften und prozesssicher herstellen.

Es wird als vorteilhaft angesehen, wenn der Sicherungsabschnitt eine Wandstärke aufweist, die größer ist als die Wandstärke des Schlauchfassungsabschnitts. Damit bildet der Sicherungsabschnitt einen sehr kompakten ringförmigen Teil, von dem sich der Schlauchfassungsabschnitt rohrförmig weg erstreckt. Vorzugsweise weist der Sicherungsabschnitt in noch nicht verformtem Zustand innen eine Ringschulter auf, die zur Aufnahme der Ringwulst des Nippels dient. Ein als Anschlag dienender Sicherungsabschnitt dient dabei zum einen der Abstützung des Sicherungsabschnitts an der Mantelfläche des Nippels und zum anderen als axialer Anschlag und somit als Positionierhilfe vor und bei der nachfolgenden Verpressung des Sicherungsabschnitts. Bei der Verpressung bewirkt die Abstützung des Stützabschnitts an dem Nippel, dass die nach innen gerichteten Kräfte den Sicherungsabschnitt so deformieren, dass das Material des Sicherungsabschnitts die Wulst umfließt und nicht einebnet. Dies ist insbesondere bei dünnwandigen Anschlussnippeln von Vorteil, wie sie im Interesse einer Material- und Gewichtseinsparung sowie einer möglichst großen Dimensionierung des durchgehenden Fluidkanals gern benutzt werden. Als dünnwandig wird ein Nippel angesehen, wenn die zur Befestigung dienende Ringwulst nicht nur an der Außenseite des Nippels als Rohr sondern auch an seiner inneren Wandung als Rille ausgeprägt ist. Dies ist meist dann der Fall, wenn die radiale Wandstärke des Nippels geringer ist als die axiale Länge der Ringwulst.

Die Verbindung zwischen der Presshülse und dem Anschlussnippel lässt sich sehr einfach und dabei preisgünstig und prozesssicher erstellen. Der Nippel kann beispielsweise in einem Walzvorgang sein gewünschtes Außenprofil erhalten. Die kostengünstige Herstellung ist möglich. Die Presshülse kann beispielsweise ebenfalls in einem Walzvorgang hergestellt sein. Sie kann ein Innenprofil aufweisen, das schon weitgehend an die Ringwulst des Nippels angepasst ist. Jedenfalls ist bei diesen Ausführungsformen die Presshülse so kurz, dass sie an dem von dem angeschlossenen Schlauch abliegenden Ende nicht oder zumindest nicht wesentlich über die Ringwulst hinaus ragt. In verpresstem Zustand schließt die Presshülse stirnseitig vorzugsweise in einer Ebene ab, die andererseits den Beginn der Ringwulst markiert.

Weitere Einzelheiten vorteilhafter Ausführungsformen der Erfindung ergeben sich aus der Zeichnung, der Beschreibung und/oder aus Unteransprüchen.

In der Zeichnung sind Ausführungsbeispiele der Erfindung veranschaulicht. Es zeigen:
- Figur 1: eine Anschlusseinrichtung mit einem Anschlussnip- pel und einer Presshülse zum Anschluss eines Schlauchs an einen Fluidkanal eines Aggregats in längs geschnittener, schematisierter Darstellung,
- Figur 2: die Anschlusseinrichtung nach Figur 1 in Explo- sionsdarstellung vor der Befestigung des Schlauchs an dem Nippel,
- Figur 3: die Anschlusseinrichtung nach Figur 2 zusammenge- fügt, jedoch noch nicht verpresst in schemati- scher, längs geschnittener Darstellung,
- Figur 4: eine abgewandelte Ausführungsform der Anschluss- einrichtung mit einem an ein Rohr angeschlossenen Schlauch,
- Figur 5: den zu der Anschlusseinrichtung gehörigen An- schlussnippel in ausschnittsweiser, schematischer Darstellung mit einigen Maßen,
- Figur 6: die zu der Anschlusseinrichtung gehörige Press- hülse in ausschnittsweiser, längs geschnittener Darstellung in unverpresstem Zustand mit einigen Maßen und
- Figur 7: die Anschlusseinrichtung mit auf dem Anschluss- nippel verpresster Presshülse in vergrößerter längs geschnittener, ausschnittsweiser Darstel- lung.

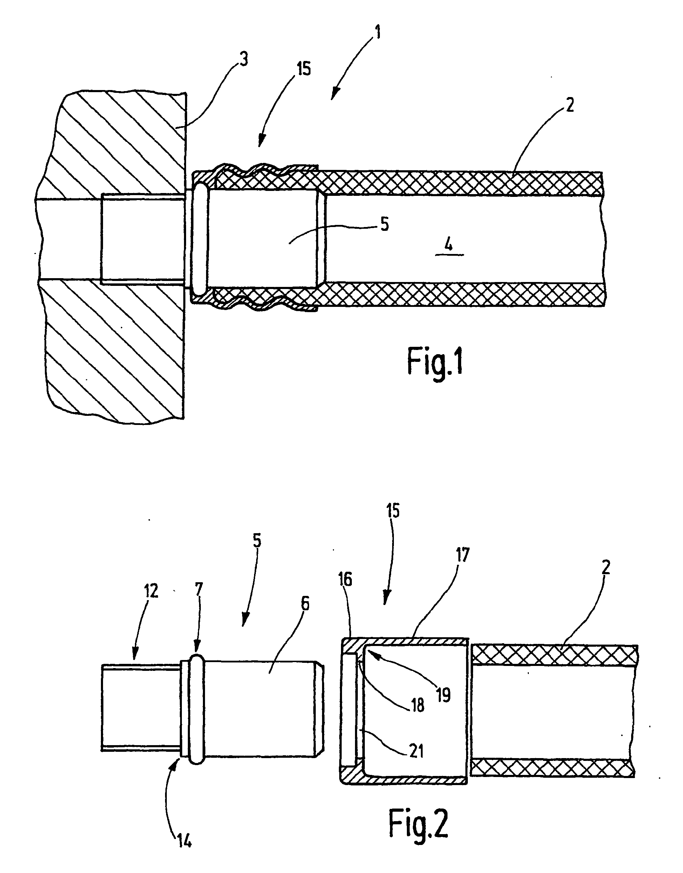

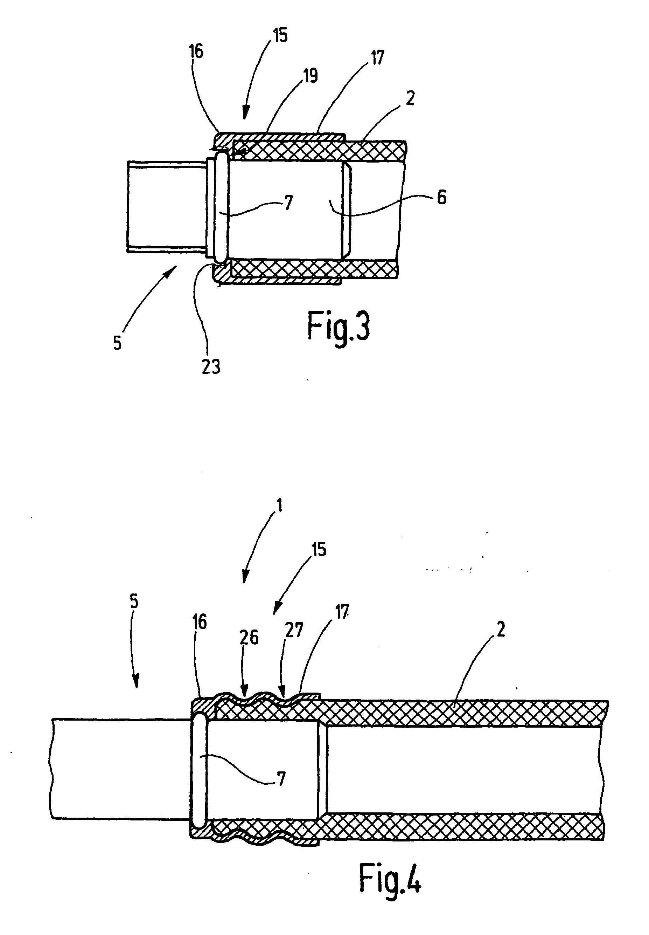

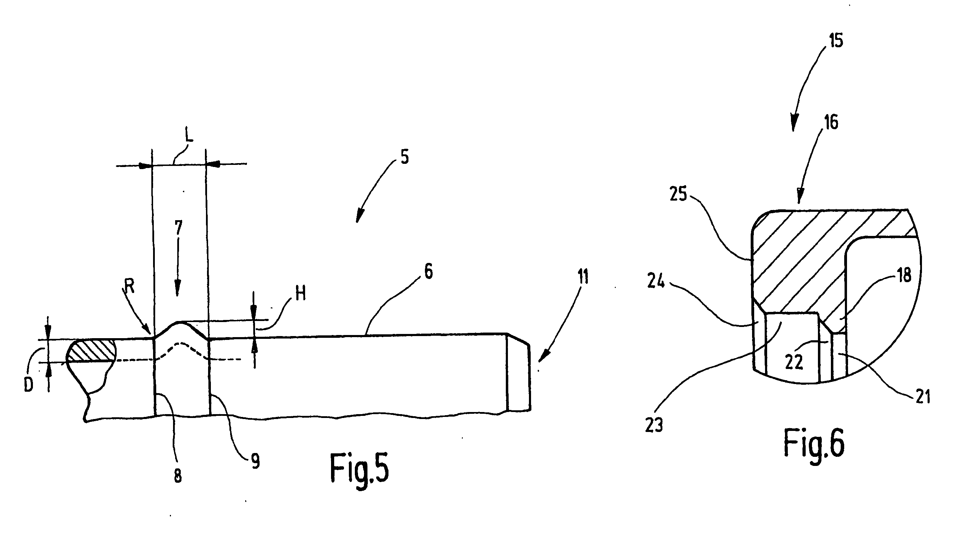

In Figur 1 ist eine Anschlusseinrichtung 1 veranschaulicht, mit der ein Schlauch 2, insbesondere ein Fluid führender Schlauch 2, an ein Aggregat 3, beispielsweise in Form eines Kältemittelkompressors, eines Öl führenden Aggregats, wie beispielsweise einer hydraulischen Einrichtung oder dergleichen, angeschlossen ist. Der Schlauch 2 und das Aggregat 3 umschließen einen Fluid führenden Kanal 4. Dieser erstreckt sich durch einen Anschlussnippel 5 hindurch, der in Figur 2 gesondert veranschaulicht ist. Der Anschlussnippel ist im Wesentlichen rohrförmig aufgebaut und umschließt einen nicht weiter veranschaulichten Fluidkanal, der sich von einer Stirnseite zu seiner anderen Stirnseite erstreckt. Außen weist er eine zylindrische Mantelfläche 6 auf, die auch kegelstumpfförmig ausgebildet sein. Der Kegelwinkel ist in solchen Fällen jedoch eher gering. An einem Ende der zylindrischen Mantelfläche 6 und zwar an dem Schlauch abgewandten Ende ist an dem Anschlussnippel 5 eine Ringwulst 7 ausgebildet, deren Einzelheiten aus Figur 5 ersichtlich sind. Sie weist einen im Wesentlichen bogenförmigen Querschnitt sowie eine Höhe H über der Mantelfläche 6 auf, die etwa der Wandungsstärke D des Anschlussnippels 5 entspricht. Ihre in Längsrichtung gemessene Länge L entspricht vorzugsweise dem zwei- bis dreifachen der Wandstärke. Beide Flanken der Ringwulst 7 schließen mit der Mantelfläche 6 einen Winkel von 30° bis 50°, vorzugsweise 40°, ein. Die Ringwulst 7 ist gerundet. Ihr Anschluss an die zylindrische Mantelfläche 6 wird durch Kanten 8, 9 mit einem Rundungsradius R von z.B. 1 mm gebildet. Die Gesamtlänge des Anschlussbereichs beträgt beispielsweise 25 mm, wovon mehr als 20 mm auf den zwischen der Ringwulst 7 und dem freien Ende 11 vorhandenen Abschnitt der Mantelfläche 6 entfallen. An der anderen Seite der Ringwulst 7 kann sich der Anschlussnippel 5 als gerades Rohr fortsetzen, wie es beispielsweise in Figur 4 veranschaulicht ist oder er kann z.B. mit einem Außengewinde 12 versehen sein, um in Gewindebohrungen eingeschraubt zu werden. Das Gewinde 12 kann sich bis zu der Ringwulst 7 erstrecken. Es ist auch möglich, in geringem Abstand zu der Ringwulst 7 eine Ringschulter 14 vorzusehen, wie es in Figur 2 angedeutet ist.

Zur Befestigung des Schlauchs 2 auf dem Anschlussnippel 5 dient eine Presshülse 15, die den Schlauch 2 fest auf dem Anschlussnippel 5 hält. Dazu wird die Presshülse 15, wie an späterer Stelle genauer erläutert, entsprechend verformt. Die unverformte Presshülse geht aus den Figuren 2, 3 und im Detail Figur 6 hervor. Wie insbesondere aus Figur 2 ersichtlich, weist die Presshülse 15 einen ringförmigen Sicherungsabschnitt 16 auf, von dem sich ein rohrförmiger Schlauchfassungsabschnitt 17 weg erstreckt. Der Schlauchfassungsabschnitt 17 ist hohlzylindrisch ausgebildet und weist einen Innendurchmesser auf, der im Wesentlichen mit dem Außendurchmesser des Schlauchs 2 übereinstimmt. Die Wandungsstärke des Schlauchfassungsabschnitts 17 ist deutlich geringer als die des Sicherungsabschnitts 16. Außen ist die unverformte Presshülse 15 zylindrisch ausgebildet, d.h. der Sicherungsabschnitt 16 und der Schlauchfassungsabschnitt 17 weisen den gleichen Außendurchmesser auf.

Im Übergang zwischen dem Sicherungsabschnitt 16 und dem Schlauchfassungsabschnitt 17 ist ein Stützabschnitt 18 ausgebildet, der mit dem Schlauchfassungsabschnitt eine Ringschulter 19 festlegt. Diese dient der stirnseitigen Anlage des Schlauchs 2. Der Stützabschnitt 18 erstreckt sich als radial nach innen gerichtete ringförmige Rippe bis zu einer schmalen zylindrischen Ringfläche 21, deren Durchmesser im Wesentlichen mit dem Durchmesser der Mantelfläche 6 übereinstimmt. Um ein leichtes Aufschieben der Presshülse 15 auf den Anschlussnippel 5 zu ermöglichen, ist die Ringfläche 21 um ein Spielmaß größer als die Mantelfläche 6.

Im Anschluss an die insbesondere aus Figur 6 ersichtliche Ringfläche 21 ist eine Schrägfläche 22 ausgebildet, die eine Fase bildet. Sie bildet somit eine abgeschrägte Schulter zu der zylindrischen Innenfläche 23 des Sicherungsabschnitts 16. Die Innenfläche 23 geht mit einer Fase 24 in die axiale Stirnfläche des Sicherungsabschnitts 16 über. Die Länge der Innenfläche 23 in Axialrichtung stimmt etwa mit der Länge L der Ringwulst 7 überein. Der Innendurchmesser der Innenfläche 23 stimmt mit dem größten Außendurchmesser der Ringwulst 7 überein.

Mit dem Anschlussnippel 5 und der Presshülse 15 wird die Schlauchverbindung wie folgt hergestellt:
Zur Herstellung der Verbindung werden der Schlauch 2, die Presshülse 15 und der Anschlussnippel 5, wie sie in Figur 2 veranschaulicht sind, zunächst axial zusammengeschoben, wie es aus Figur 3 hervorgeht. Der Schlauch 2 sitzt dabei bereits einigermaßen fest auf der Mantelfläche 6 des Anschlussnippels 5. Er stößt mit seiner Stirnfläche an der Ringschulter 19 an. Der Stützabschnitt 18 stößt an der Ringwulst 7 an. Die Innenfläche des Schlauchfassungsabschnitts 17 liegt an der Außenseite des Schlauchs 2 an oder hat ein geringes Spiel zu dieser. Die Innenfläche 23 liegt mit geringem Spiel an der Ringwulst 7 an und übergreift diese.

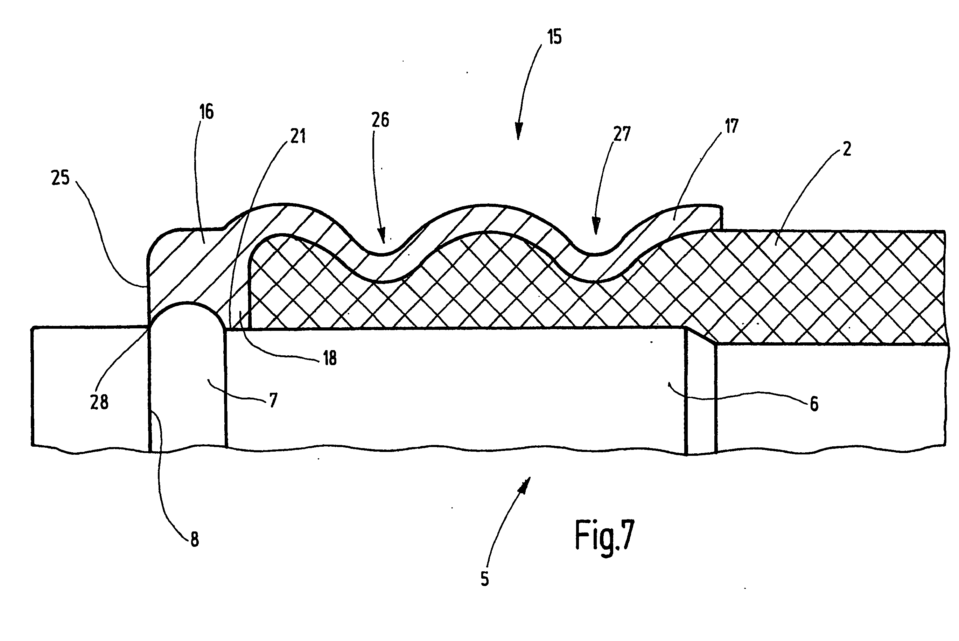

Es wird nun mit einem Presswerkzeug, wie beispielsweise einer Presszange oder mit einem umlaufenden Presswerkzeug, das Rollen auf einer Orbitalbahn um die Presshülse 15 führt und dabei radial nach innen drückt, eine radiale Verformung der Presshülse 15 hervorgerufen. Dabei wird sowohl der Schlauchfassungsabschnitt 17 als auch der Sicherungsabschnitt 16 plastisch radial nach innen deformiert. Der Schlauchfassungsabschnitt 17 wird dabei insbesondere in wenigstens einer, vorzugsweise mehreren Ringzonen 26, 27 nach innen gedrückt. Der Schlauchfassungsabschnitt 17 erhält dadurch im Längsschnitt eine wellenförmige Gestalt. Dadurch wird, wie insbesondere aus Figur 7 hervorgeht, der Schlauch 2 fest an die Mantelfläche 6 des Anschlussnippels 5 angepresst, wodurch Fluiddichtigkeit hergestellt wird.

Bei der Verformung des Sicherungsabschnitts 16 wird insbesondere der in radialer Fluchtung mit der Ringwulst 7 stehende Bereich radial nach innen gedrückt, wobei der außenumfang des Sicherungsabschnitts 16 im Wesentlichen zylindrisch bleibt. Der Stützabschnitt 18 wird radial nicht nach innen verformt. Die Ringfläche 21 wird dabei dennoch etwas nach innen gedrückt und legt sich somit fest an der Mantelfläche 6 des Anschlussnippels 5 an. Das übrige Material des Sicherungsabschnitts 16 umfließt die Ringwulst 7 und umfasst diese somit formschlüssig. Die plastische Deformation des Sicherungsabschnitts 16 ist dabei relativ gering. Die Stirnfläche 25 ist und bleibt während der Deformation auf einer Höhe mit der Kante 8 und schließt somit mit der Ringwulst 7 bündig ab. Der Sicherungsabschnitt 16 bildet somit nach erfolgter Deformation eine Kante 28, an der die Stirnfläche 25 mit der an der Ringwulst 7 anliegenden Fläche einen spitzen Winkel von beispielsweise 50° einschließt.

Durch die Abstützung des Sicherungsabschnitts über den Stützabschnitt 18 an den Anschlussnippel 5 wird während der plastischen Deformation des Sicherungsabschnitts 18 ein Flachdrücken der Ringwulst 7 vermieden. Vielmehr legt sich das Material des Sicherungsabschnitts 16 flächig an die Ringwulst 7 an und umfließt diese dann. Dadurch wird ein dichter Abschluss und eine axiale formschlüssige Sicherung der Presshülse 15 und des Schlauchs 2 an bzw. auf dem Anschlussnippel 5 erreicht.

Die erfindungsgemäße Anschlusseinrichtung 1 ist vorstehend anhand eines Schraubnippels beschrieben worden. Wie bereits erwähnt, kann die Presshülse 15 jedoch auch zur Befestigung des Schlauchs 2 an einem mit einer Ringwulst 7 versehenen Rohr verwendet werden, wie es aus Figur 4 ersichtlich ist. Zu der in Figur 4 veranschaulichten Ausführungsform gelten die vorstehenden Ausführungen unter Zugrundelegung gleicher Bezugszeichen entsprechend.

Eine aus einem Anschlussnippel 5 mit Ringwulst 7 und einer Presshülse 15 bestehende Anschlusseinrichtung 1 baut besonders kurz, indem die Presshülse 15 einen im Querschnitt im Wesentlichen quadratischen Anschlussbereich 16 aufweist, der auf die Ringwulst 7 aufgepresst wird. Der Sicherungsbereich 16 stellt somit die axiale Befestigung der Presshülse auf dem Anschlussnippel 5 sicher. Er umgreift und übergreift die Ringwulst 7. Jedoch hintergreift er diese nicht, d.h. er weist keinen sich über die Ringwulst 7 hinaus erstreckenden Abschnitt auf. Dadurch baut die Anschlusseinrichtung 1 in Axialrichtung besonders kurz und ermöglicht die Schaffung einer großen Dichtungslänge. Die Gesamtlänge der Anschlusseinrichtung 1 wird ausschließlich von der Länge der zur Dichtung dienenden Mantelfläche 6 bezüglich der axialen Länge der Ringwulst 7 bestimmt. Es ist kein zusätzlicher Platz für etwaige, die Ringwulst 7 hintergreifende Abschnitte erforderlich.

## Patentansprüche

1. Anschlusseinrichtung (1) zum Anschließen eines Schlauches (2) an fluidführende Leitungen oder Aggregate (3),
mit- einem Anschlussnippel (5), der einen Fluidkanal eine zylindrische oder kegelstumpfförmige Mantelfläche (6) aufweist, an der, eine ringsumlaufende gerundete Ringwulst (7) ausgebildet ist,
mit einer Presshülse (15), die einen Schlauchfassungsabschnitt (17) und einen der Ringwulst (7) zugeordneten, plastisch verformten Sicherungsabschnitt (16) aufweist, der die Ringwulst (7) übergreift, um die Presshülse (15) axial an dem Anschlussnippel (5) zu sichern, **dadurch gekennzeichnet, dass** sich eine axiale Stirnfläche (25) des Sicherungsabschnitts (16) auf einer Höhe mit der den Anschluss der Ringwulst (7) an die Mantelfläche (6) bildenden Kante (8) befindet und die Stirnfläche (25) somit bündig mit der Ringwulst (7) abschließt.

2. Anschlusseinrichtung nach Anspruch 1, **dadurch gekennzeichnet, dass** der Sicherungsabschnitt (16) eine Wandstärke aufweist, die größer ist als eine Wandstärke des Schlauchfassungsabschnitts (17).

3. Anschlusseinrichtung nach Anspruch 1, **dadurch gekennzeichnet, dass** der Schlauchfassungeabschnitt (17) eine hohlzylindrische Grundform aufweist und durch plastische Deformation an zumindest einer Stelle (26, 27) radial nach innen deformiert ist.

4. Anschlusseinrichtung nach Anspruch 3, **dadurch gekennzeichnet, dass** der Schlauchfassungsabschnitt (17) einen Innendurchmesser aufweist, der im Wesentlichen mit dem Außendurchmesser des anzuschließenden Schlauches (2) übereinstimmt.

5. Anschlusseinrichtung nach Anspruch 1, **dadurch gekennzeichnet, dass** die Presshülse (15) zwischen dem Schlauchfassungsabschnitt (17) und dem Sicherungsabschnitt (16) eine radial nach innen gerichtete Ringschulter (21) zur stirnseitigen Anlage des Schlauches (2) aufweist.

6. Anschlusseinrichtung nach Anspruch 1, **dadurch gekennzeichnet, dass** der Sicherungsabschnitt (17) einen Stützabschnitt (18) aufweist, der zwischen dem Schlauch (2) und der Ringwulst (7) angeordnet ist und der durch einen ringförmigen, radial nach innen gerichteten Vorsprung gebildet ist.

7. Anschlusseinrichtung nach Anspruch 6, **dadurch gekennzeichnet, dass** der Vorsprung eine schmale zylindrische radial nach innen weisende Ringfläche (21) aufweist, deren Durchmesser geringer ist als der Außendurchmesser der Ringwulst (7).

8. Anschlusseinrichtung nach Anspruch 7, **dadurch gekennzeichnet, dass** der Durchmesser der Ringfläche (21) bis auf ein geringes Spiel mit dem Durchmesser der Mantelfläche (6), in unmittelbarem Anschluss an die Ringwulst (7), übereinstimmt.

9. Anschlusseinrichtung nach Anspruch 6, **dadurch gekennzeichnet, dass** die Ringwulst (7) axial fest und spielfrei zwischen dem Stützabschnitt (18) und dem plastisch verformten Bereich (16) des Sicherungsabschnitts (17) gehalten ist.

10. Anschlusseinrichtung nach Anspruch 1, **dadurch gekennzeichnet, dass** der plastisch verformte Bereich des Sicherungsabschnitts (16) an einer spitzwinkligen Kante (28) endet, die an einem Ende der Ringwulst (7) anliegt.

## Claims

1. Connecting device (1) for the connection of a hose (2) to fluid-transporting lines or assemblies (3), comprising
a connecting nipple (5) comprising a fluid channel and a jacket surface (6) having the form of a cylinder or a truncated cone, said barrel surface being provided with a peripheral rounded annular bead (7),
a compression sleeve (15) having a hose fitting section (17) and a securing section (16) that is plastically deformable and associated with the annular bead (7), said securing section extending over the annular bead (7) in order to secure the compression sleeve (15) in axial direction on the connecting nipple (5),
**characterized in that** an axial end face (25) of the securing section (16) is located on the same level as the edge (8) forming the connection of the annular bead (7) with the jacket surface (6), and that the end face (25) is thus flush with the annular bead (7).

2. Connecting device in accordance with Claim 1, **characterized in that** the securing section (16) has a wall thickness that is greater than a wall thickness of the hose fitting section (17).

3. Connecting device in accordance with Claim 1, **characterized in that** the hose fitting section (17) has the basic shape of a hollow cylinder and is deformed radially inward by plastic deformation on a least one point (26, 27).

4. Connecting device in accordance with Claim 3, **characterized in that** the hose fitting section (17) has an inside diameter that substantially corresponds to the outside diameter of the hose (2) that is to be connected.

5. Connecting device in accordance with Claim 1, **characterized in that** the compression sleeve (15) comprises an annular shoulder (21) between the hose fitting section (17) and the securing section (16), said annular shoulder being directed radially inward for the end-face abutment of the hose (2).

6. Connecting device in accordance with Claim 1, **characterized in that** the securing section (17) has a supporting section (18) arranged between the hose (2) and the annular bead (7), said annular bead being formed by an annular projection that is directed radially inward.

7. Connecting device in accordance with Claim 6, **characterized in that** the projection has a narrow cylindrical radially inward facing annular surface (21), the diameter of said annular surface being smaller than the outside diameter of the annular bead (7).

8. Connecting device in accordance with Claim 7, **characterized in that** the diameter of the annular surface (21) corresponds to the diameter of the jacket surface (6), with the exception of minimal play, directly adjoining the annular bead (7).

9. Connecting device in accordance with Claim 6, **characterized in that** the annular bead (7) is held in an axially stable and tolerance-free manner between the support section (18) and the plastically deformed region (16) of the securing section (17).

10. Connecting device in accordance with Claim 1, **characterized in that** the plastically deformed region of the securing section (16) ends at an acute-angle edge (28), said edge abutting against one end of the annular bead (7).

## Revendications

1. Dispositif de raccord (1) pour raccorder un tuyau flexible (2) à des conduites ou modules (3) de guidage de fluide,
comprenant un raccord fileté (5) qui présente un canal de fluide et une surface d'enveloppe cylindrique ou tronconique (6), sur laquelle un bourrelet annulaire arrondi (7) circulant de manière annulaire est réalisé,
comprenant un manchon de serrage (15) qui présente une section de saisie de tuyau flexible (17) et une section de fixation (16) déformée plastiquement, associée au bourrelet annulaire (7), qui recouvre le bourrelet annulaire (7) afin de fixer le manchon de serrage (15) de manière axiale sur le raccord fileté (5), **caractérisé en ce qu'** une face frontale axiale (25) de la section de fixation (16) se trouve à une hauteur avec le bord (8) formant le raccord du bourrelet annulaire (7) à la surface d'enveloppe (6) et la face frontale (25) se termine ainsi à fleur avec le bourrelet annulaire (7).

2. Dispositif de raccord selon la revendication 1, **caractérisé en ce que** la section de fixation (16) présente une épaisseur de paroi qui est supérieure à une épaisseur de paroi de la section de saisie de tuyau flexible (17).

3. Dispositif de raccord selon la revendication 1, **caractérisé en ce que** la section de saisie de tuyau flexible (17) présente une forme de base cylindrique creuse et est déformée radialement vers l'intérieur par une déformation plastique en au moins un endroit (26, 27).

4. Dispositif de raccord selon la revendication 3, **caractérisé en ce que** la section de saisie de tuyau flexible (17) présente un diamètre interne qui coïncide essentiellement avec le diamètre externe du tuyau flexible (2) à raccorder.

5. Dispositif de raccord selon la revendication 1, **caractérisé en ce que** le manchon de serrage (15) présente, entre la section de saisie de tuyau flexible (17) et la section de fixation (16), un épaulement annulaire (21) orienté radialement vers l'intérieur pour l'appui côté frontal du tuyau flexible (2).

6. Dispositif de raccord selon la revendication 1, **caractérisé en ce que** la section de fixation (17) présente une section d'appui (18) qui est disposée entre le tuyau flexible (2) et le bourrelet annulaire (7) et qui est formée par une saillie annulaire, orientée radialement vers l'intérieur.

7. Dispositif de raccord selon la revendication 6, **caractérisé en ce que** la saillie présente une surface annulaire cylindrique étroite (21), tournée radialement vers l'intérieur, dont le diamètre est plus faible que le diamètre externe du bourrelet annulaire (7).

8. Dispositif de raccord selon la revendication 7, **caractérisé en ce que** le diamètre de la surface annulaire (21) coïncide, exception faite d'un faible jeu, avec le diamètre de la surface d'enveloppe (6) directement après le bourrelet annulaire (7).

9. Dispositif de raccord selon la revendication 6, **caractérisé en ce que** le bourrelet annulaire (7) est maintenu de manière fixe axialement et sans jeu entre la section d'appui (18) et la région déformée plastiquement (16) de la section de fixation (17).

10. Dispositif de raccord selon la revendication 1, **caractérisé en ce que** la région déformée plastiquement de la section de fixation (16) se termine au niveau d'un bord à angle aigu (28) qui repose sur une extrémité du bourrelet annulaire (7).
